# EUROPEAN PATENT SPECIFICATION

(11) **EP 1 787 140 B1**
(45) Date of publication and mention of the grant of the patent: **19.09.2012**
(21) Application number: 05756243.1
(22) Date of filing: 05.07.2005
(51) Int. Cl.: G01S 13/93, G01S 13/72, G08G 5/04

(54) **COLLISION AVOIDANCE SYSTEM**
SYSTEM ZUR KOLLISIONSVERMEIDUNG
SYSTÈME POUR ÉVITER UNE COLLISION

(30) Priority: 09.07.2004 EP 04254146; 09.07.2004 GB 0415400
(43) Date of publication of application: 23.05.2007
(73) Proprietor: BAE Systems PLC, London SW1Y 5AD (GB)
(72) Inventor: ANSELL, Darren William Bae Systems Programmes, Preston Lancashire PR4 1AX (GB); KIRKHAM, Peter Mark Bae Systems Programmes, Preston Lancashire PR4 1AX (GB)
(74) Representative: BAE SYSTEMS plc Group IP Department
(86) International application number: PCT/GB2005/050103
(87) International publication number: WO 2006/021813

(56) References cited:
- EP-A- 0 926 511
- GB-A- 2 136 097
- US-A1- 2002 032 528
- US-A1- 2002 133 294

## Description

The present invention relates to a method and a system for collision avoidance, and in particular but not exclusively, to a collision avoidance system for use in aircraft.

For flight safety, aircraft must avoid other aircraft within the surrounding air space and the avoidance of collisions is an important task for pilots. Unmanned aerial vehicles (UAVs) on the other hand require a system to enable them to sense and avoid other aircraft in the surrounding air space. The full potential of UAVs cannot be realised until they are proven to have the ability to do this effectively and reliably and so operate safely within unrestricted air space. Aviation authorities will not give approval for UAVs to enter routine flight in commercial air space unless the UAVs meet a requirement for full collision avoidance of other aircraft.

Currently, there are transponder-based systems for use in UAVs but these only aid in avoiding cooperating aircraft, i.e. those aircraft which use transponders. Friendly aircraft might emit an Identification Friend or Foe (IFF) signal which may include aircraft kinematics data. There is currently no system that aids UAVs to avoid aircraft without transponders (for example hot air balloons or missiles) or aircraft with inoperative transponders, and therefore there is no system that allows UAVs to fly unaided in unrestricted air space.

Document US 2002/0032528 A1 discloses a method for determining conflicting paths between mobile vehicles. Document GB 2 136 097 A discloses the use of quadratic extrapolation in a target-tracking interception control system.

Accordingly, there is provided a method for avoiding a collision between a host vehicle and an intruder vehicle comprising the steps of: detecting an intruder vehicle within a predetermined region around the host vehicle and collecting data on the intruder vehicle position over time; predicting a projected path of the intruder vehicle using a quadratic extrapolation of the intruder vehicle position data; assigning a protection region around the host vehicle, and determining if the intruder vehicle projected path will intercept the host vehicle protection region and thereby determining if there will be a conflict.

Such a method of collision avoidance allows the host vehicle to detect other aircraft within the surrounding air space and to determine if a possible conflict exists. A conflict is said to exist between a host vehicle and an intruder vehicle when the minimum separation is less than a specified safety limit to prevent, for example, the jet stream of one aircraft affecting the other aircraft. The designation of a protection region around the host vehicle enables a safety limit to be set in the form of a desired miss distance between the vehicles, the miss distance taking into account characteristics of each aircraft, such as size and the likely range of weapon systems of the intruder aircraft.

The method further comprises the step of calculating, on determination of the existence of conflict between the host vehicle and the intruder vehicle, an alteration of the host vehicle course such that the intruder vehicle projected path will not intercept the host vehicle protection region. Alternatively, the method further comprises the step of, on determining that there will be a conflict between the host vehicle and the intruder vehicle, assigning a protection zone around the intruder vehicle, and calculating an alteration of the host vehicle course such that the host vehicle will not intercept the intruder vehicle protection zone.

Once the existence of conflict is determined, the host vehicle must alter its course if it is to avoid the intruder vehicle. Alteration of the course of the host vehicle so that the intruder vehicle projected path does not intercept the host vehicle protection region ensures the host vehicle avoids the intruder vehicle with the required safety margin. Calculation of a host vehicle course alteration such that the host vehicle will not intercept the intruder vehicle protection zone requires a lower processing capacity than the calculation of a course alteration such that the intruder vehicle projected path will not intercept the host vehicle protection region.

The host vehicle course alteration may be output as a resolution vector to a display means or an automatic steering device.

The output of a resolution vector to a display means gives an operator a visual indication of the remedial action required to avoid the intruder aircraft. The output of the vector to an automatic steering device enables the automatic steering device to act on information provided by the collision avoidance system without requiring operator input.

Advantageously, the calculation of a host vehicle course alteration takes into account host vehicle characteristics and any course alterations that do not comply with these characteristics are discarded.

Vehicles are limited in possible manoeuvres by their ability, for example, to sustain sharp turns. It is therefore preferable for these limitations to be taken into account and only a course alteration which is suitable and/or practicable provided. Any course alterations which do not comply with the international standard rules of the air may be discarded. The requirement for terrain avoidance is also taken into account when a course alteration is selected.

The method may further comprise, in the event a conflict has been determined, the step of calculating the critical time at which the intruder vehicle projected path is closest to the host vehicle.

Conflict can then be determined to exist only when the calculated critical time is positive, i.e. when the critical time is in the future. This prevents unnecessary determination of the existence of conflict when the host vehicle is moving away from the intruder vehicle.

The method may further comprise the step of selecting a course alteration such that at least one of time expenditure, fuel expenditure or change in direction of the host vehicle resulting from the course alteration is minimised.

Choosing the least costly course alteration means there should be more manoeuvrability available to the host vehicle to avoid new situations, such as the intruder vehicle changing course or the detection of further intruders.

On the detection of an intruder vehicle within the host vehicle protection region, it is preferable for an emergency course alteration to be selected.

If an intruder vehicle is detected within the host vehicle protection region, it is deemed to be too close to the host vehicle for safety. The host vehicle could therefore follow an emergency course, in order to remove the intruder vehicle from the host vehicle protection region, and this may effected by an automatic steering device, or autopilot.

The method may further comprise the step of storing multiple intruder vehicle position data. This enables all intruder conflicts within the predetermined region around the host vehicle to be evaluated and manoeuvre constraints to be calculated for all intruder vehicles that the host vehicle has data for, thereby preventing the calculation of a host vehicle course alteration which will avoid one intruder vehicle currently in conflict with the host vehicle but bring the host vehicle into conflict with another intruder vehicle.

According to another aspect of the present invention, there is provided a collision avoidance system for a host vehicle comprising detecting means adapted to detect an intruder vehicle within a predetermined region around the host vehicle and collect positional data on the intruder vehicle; means for predicting a projected path of the intruder vehicle using a quadratic extrapolation of the intruder vehicle positional data; means for determining a protection region around the host vehicle, and conflict determining means adapted to determine if the intruder vehicle projected path will intercept the host vehicle protection region and thereby determine the existence of conflict between the host vehicle and the intruder vehicle.

The invention also provides a vehicle having such a collision avoidance system.

The invention will now be described by way of example and with reference to the accompanying drawings, in which:
Figure 1 is a schematic view of an intruder aircraft in a host aircraft reference frame;
Figure 2 is a block diagram of an embodiment of a collision avoidance system in accordance with the invention, and
Figure 3 illustrates the regions of space restricted by the manoeuvre constraints on a host aircraft.

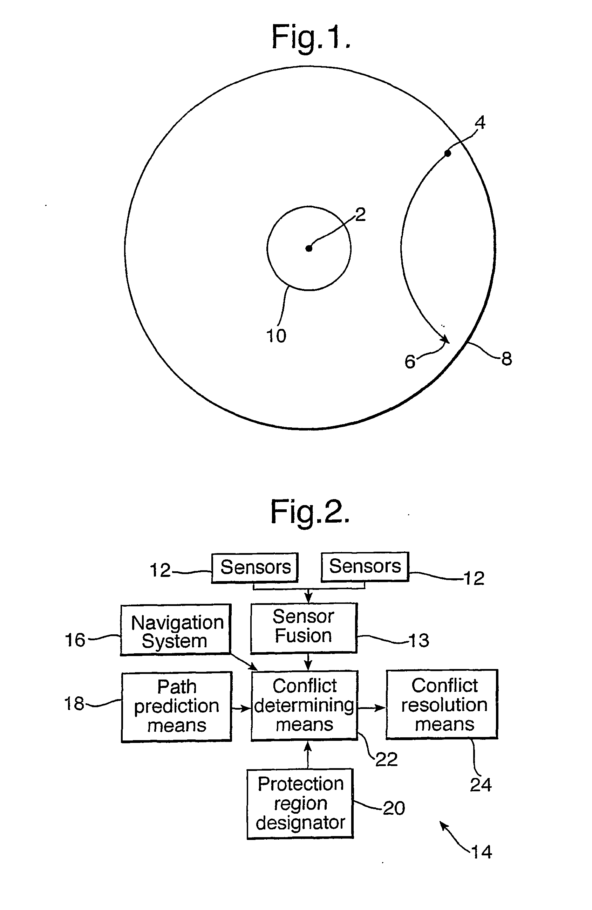

Figure 1 shows a host aircraft 2, equipped with a collision avoidance system (shown in Figure 2), and an intruder aircraft 4 following a path 6 in the host vehicle reference frame within a region 8 of air space surrounding the host aircraft 2, the region 8 corresponding to the range of sensors incorporated in the collision avoidance system.

Referring to Figures 1 and 2, as the intruder aircraft 4 approaches the host aircraft 2, sensors 12 incorporated in the collision avoidance system 14 on the host aircraft 2, for example on-board radar systems, detect the intruder aircraft 4. Intruder aircraft data, for example position, direction and speed of the aircraft over time are captured, stored, and used to generate a projected path of the intruder aircraft. Positional information on cooperating intruder aircraft may be obtained from IFF data, GPS data or by some other means. Non-cooperating aircraft positional information may be obtained from on-board sensors. In either of these cases, the alternative sources of data can be received by the host aircraft 2, data from more than one sensor being fused by the sensor fusing means 13, and smoothed using the Kalman filtering process described below before being used to feed the collision avoidance system algorithm.

A navigation system 16 on board the host aircraft is used to provide global positioning satellite (GPS) data from which the host aircraft position is determined, in terms of an earth axis coordinate system to locate the host above a specific point on the earth's surface. This is then converted to a fixed frame coordinate system taking its positioning from the earth axis coordinate system at the time the intruder was first detected. The fixed frame coordinate system is typically taken to be a north-east-down (NED) Cartesian coordinate system, with the origin at the zero altitude point immediately below the host aircraft at the time of first detection of the intruder aircraft.

Future intruder aircraft positions are estimated in the earth axis coordinate system to generate a projected path 6 of the intruder aircraft. Kalman filtering is employed to remove some of the noise produced by using data supplied by the on-board radar thereby smoothing the data values to improve the estimate of the intruder aircraft state, e.g. position, velocity and acceleration. Extrapolation of the intruder aircraft position in a body axis coordinate system of the host aircraft incorporates the host aircraft velocity and acceleration. Any change in velocity or acceleration by the host aircraft would invalidate the state history of the Kalman filter on which the extrapolation was based. The extrapolation of the intruder position is therefore carried out by the path prediction means 18 in the earth axis coordinate system to ensure the predicted positions are independent of any host aircraft manoeuvres.

A fixed reference point in the fixed frame coordinate system is obtained for use in the calculation of the intruder aircraft acceleration, polar coordinate radar data being unable to provide the information due to the non-linear relationship between the polar data and the aircraft motion. The conversion to a fixed frame coordinate system ensures that manoeuvres of the host and intruder aircraft do not affect the calculation of the intruder aircraft acceleration.

The intruder aircraft position is then converted from the fixed frame coordinate system to a body axis coordinate system to give the intruder aircraft position relative to the host aircraft. Over time, the body axis coordinate system moves with the host aircraft; the origin of the fixed frame coordinate system remains as a fixed reference point until the intruder aircraft has passed out of the host aircraft detection range.

A collision detection algorithm is employed by the collision avoidance system 14 at regular time intervals to update the system with information on both the host and intruder aircraft, such as the aircraft positions. At each successive time frame while the intruder aircraft is within the detection range, host aircraft navigation data and intruder aircraft data are passed to the collision avoidance system processing means. The velocity and acceleration of both the host and intruder aircraft are calculated each time new data are supplied in order to maintain the accuracy of the predicted position of the intruder aircraft relative to the host aircraft.

Using the information previously obtained on the intruder aircraft state, the collision avoidance system 14 estimates a projected path 6 of the intruder aircraft 4 in the body axis coordinate system. Once the position and trajectory of the intruder aircraft 4 in relation to the host aircraft 2 is known, the possibility of a future conflict is determined.

A protection region designator 20 incorporated in the collision avoidance system 14 assigns a protection region 10 around the host aircraft, based on the desired miss distance between the host and intruder aircraft and an error compensation term (defined below). The miss distance takes into account, for example, the size of the host and intruder aircraft, the likely range of any weapon systems of the intruder aircraft and the aerodynamic effects of the aircraft. From the data on the intruder aircraft state and the host aircraft position and acceleration, the collision avoidance system 14 calculates the closest point the intruder aircraft projected path 6 comes to the host aircraft 2. If the point of closest approach is outside the host aircraft projection region 10, conflict determining means 22 deem that a conflict does not exist. If the point of closest approach lies within the protection region 10, the intruder aircraft 4 is deemed to approach the host aircraft 2 too closely for safety and a conflict is registered by the collision avoidance system 14.

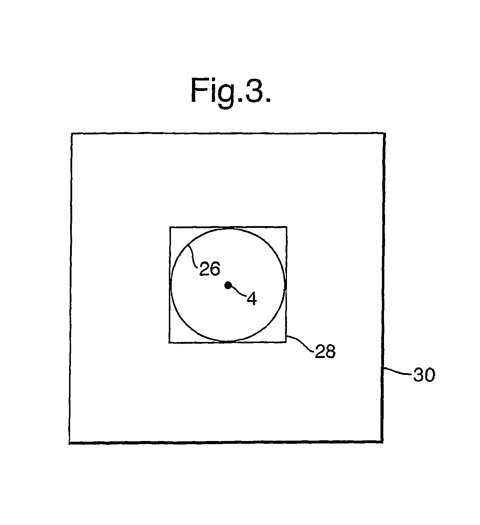

Once a conflict has been registered, conflict resolution means 24 calculate a host aircraft course alteration such that, after carrying out the course alteration at its current speed, the host aircraft 2 misses the intruder aircraft 4 by a safe distance. The collision avoidance system 14 centres on the intruder aircraft 4 a hypothetical protection zone 26 (shown in Figure 3) which the host aircraft 2 is constrained to avoid. To avoid the intruder aircraft 4 by a safe distance the host aircraft 2 must touch the edge of the protection zone 26 or miss the zone 26 entirely. A radius is assigned for a spherical zone 26 based on the sum of: the desired miss distance; a constant term to account for lags in aircraft response, and an error compensation term (a heuristic based on the expected error in the estimation of the future position of the intruder aircraft, the expected error being derived from the covariance matrix of the Kalman filters for the intruder aircraft's projected path). This protection zone 26 defines lower bounds of the manoeuvre constraints of the host aircraft. The lower bounds are the area defined by the intruder aircraft in the air space surrounding the host aircraft. They form a square 28 that circumscribes the centre section of the hypothetical sphere 26 surrounding the intruder aircraft 4. The upper limits of the manoeuvre constraints are usually the physical limits of the host aircraft; they form an outer boundary 30 of maximum climb, dive, left and right turn parameters that the host aircraft cannot go beyond.

The course alteration calculated by the conflict resolution means 24 is expressed in terms of acceleration and climb rate. The acceleration is integrated to provide a vector and the collision avoidance system 14 outputs a resolution vector and the time needed to achieve it to a display. A pilot then implements the course alteration to avoid the intruder aircraft 4. Alternatively, the collision avoidance system 14 may output the avoidance manoeuvre to an automatic steering device, e.g. autopilot. The autopilot may be arranged to return the host aircraft 2, once the avoidance manoeuvre has been carried out, to the desired vector in which it was initially heading.

Typically, the collision avoidance system 14 requests a helical manoeuvre with constant speed, climb rate and rate of turn to avoid a conflict, as such a manoeuvre requires an approximately constant trim, so even if the host aircraft 2 cannot change its rate of turn instantly, the aircraft 2 should stabilise quickly compared to the time the manoeuvre takes.

If no solution can be found by the conflict resolution means 24 at the current host aircraft speed, the calculations are repeated using a slower speed. If still no solution is found or in the event that the intruder aircraft 4 is first detected within the host vehicle protection region 10, the conflict resolution means 24 is adapted to select an emergency manoeuvre, typically consisting of a turn, at a fraction of the current speed, onto a path orthogonal to the intruder vehicle flight path in the direction involving the least magnitude heading change. Such an emergency manoeuvre overrides any other host vehicle manoeuvre requests.

The manoeuvre constraints restrict the space from which the conflict resolution means 24 can select a course. The conflict resolution means 24 also takes into account the capabilities of the host aircraft, ground and weather avoidance, and the rules of the air which are preprogrammed into the system. A cost heuristic is used to select the best allowable course alteration. The best manoeuvre is taken to be that with the gentlest constant trim and which causes the host aircraft to avoid entering the intruder aircraft protection zone 26. As such, the manoeuvre lasts until the closest approach and the host aircraft path touches the edge of the intruder aircraft protection zone 26. If the intruder estimation is wrong or the intruder manoeuvres, choosing the gentlest manoeuvre means there should be more manoeuvrability available to the host aircraft 2 to avoid new situations. The cost heuristic is based on the weighted sum of the squares of the difference in climb rate and turn rate between the manoeuvre and either the desired vector of the host aircraft 2 or the straight and level, with the weights chosen as desired, for example to favour turning. The cost heuristic may additionally take into account time and/or fuel expenditure resulting from the course alteration.

By calculating a quadratic approximation of the expected difference between the positions of the host aircraft 2 and intruder aircraft 4 in the earth axis coordinate system at a future time, the rate of change of the square of the range may be calculated. The time when the host aircraft 2 most closely approaches the intruder aircraft 4 can then be calculated. The conflict determining means 22 subsequently determines the existence of conflict only when the calculated critical time is positive. If the critical time is found to be negative, the intruder aircraft 4 is deemed to be moving away from the host aircraft 2 and is therefore not in conflict.

Having now described various embodiments in accordance with the invention, numerous modifications will become apparent to the skilled person. The system may be used with any type of vehicle where it is necessary to sense and avoid other vehicles, such as in three dimensions submarines, and in two dimensions ships or land vehicles.

It will be understood that the host vehicle protection region and the intruder vehicle protection zone may be spherical or any other shape and may or may not be located centrally around the host vehicle. Intruder vehicles in front of the host vehicle may be considered more of a threat than those behind the host vehicle due to their higher closing speed.

The host vehicle protection region and the intruder vehicle protection zone may be formed taking characteristics of the intruder vehicle into account, such as the size, speed or aerodynamic effects of the vehicle or whether it is a cargo or military vehicle. The collision avoidance system therefore may include means for determining the type of intruder vehicle and assign the size of the protection region or zone accordingly.

For host vehicles slow to respond to requests to change rate of turn, the collision avoidance system may be adapted to request a higher rate of turn than that required for avoidance until the rate of turn matches that required.

It is advantageous for the collision avoidance system to evaluate all potential and actual intruder conflicts within the predetermined region around the host vehicle and to calculate manoeuvre constraints to avoid all intruder vehicles that the host vehicle has data for. The collision avoidance system can combine the manoeuvre constraints for each of the multiple intruders and select a course alteration from the remaining possible alterations to give an optimum path, as described above, for the host vehicle such that the host vehicle will avoid all intruders. This avoids the calculation of a host vehicle course alteration which will avoid one intruder vehicle currently in conflict with the host vehicle but bring the host vehicle into conflict with another intruder vehicle.

## Claims

1. A method for avoiding a collision between a host vehicle (2) and an intruder vehicle (4) comprising the steps of:
- detecting an intruder vehicle within a predetermined region around the host vehicle and collecting data on the intruder vehicle position over time;
- predicting a projected path (6) of the intruder vehicle using a quadratic extrapolation of the intruder vehicle position data;
- assigning a protection region (10) around the host vehicle;
- determining if the intruder vehicle projected path will intercept the host vehicle protection region and thereby determining if there will be a conflict, and,
- on determining that there will be a conflict between the host vehicle and the intruder vehicle, calculating an alteration of the host vehicle course such that the intruder vehicle projected path will not intercept the host vehicle protection region.

2. A method for avoiding a collision between a host vehicle and an intruder vehicle as claimed in Claim 1 further comprising the steps of:
- on determining that there will be a conflict between the host vehicle and the intruder vehicle, assigning a protection zone around the intruder vehicle, and
- calculating an alteration of the host vehicle course such that the host vehicle will not intercept the intruder vehicle protection zone.

3. A method for avoiding a collision between a host vehicle and an intruder vehicle as claimed in Claim 2 further comprising the step of:
- outputting the course alteration as a resolution vector to a display means or an automatic steering device.

4. A method for avoiding a collision between a host vehicle and an intruder vehicle as claimed in any of Claims 1 to 3 wherein the calculation of a host vehicle course alteration takes into account host vehicle characteristics and any course alterations that do not comply with these characteristics are discarded.

5. A method for avoiding a collision between a host vehicle and an intruder vehicle as claimed in any preceding claim further comprising the step of:
- in the event a conflict has been determined, calculating the time at which the intruder vehicle projected path is closest to the host vehicle.

6. A method for avoiding a collision between a host vehicle and an intruder vehicle as claimed in any preceding claim further comprising the step of:
- selecting a course alteration such that at least one of time expenditure, fuel expenditure or change in direction of the host vehicle resulting from the course alteration is minimised.

7. A method for avoiding a collision between a host vehicle and an intruder vehicle as claimed in any preceding claim further comprising the step of:
- on detecting an intruder vehicle within the host vehicle protection region, selecting an emergency course alteration.

8. A method for avoiding a collision between a host vehicle and an intruder vehicle as claimed in any preceding claim for detecting multiple intruder vehicles, further comprising the step of storing the multiple intruder vehicle position data.

9. A method for avoiding a collision between a host vehicle and an intruder vehicle as claimed in Claim 8 further comprising the step of:
- calculating a host vehicle course alteration which will avoid conflict with all intruder vehicles.

10. A collision avoidance system (14) for a host vehicle comprising:
- detecting means (12) adapted to detect an intruder vehicle within a predetermined region around the host vehicle and collect data on the intruder vehicle position over time;
- means (18) for predicting a projected path of the intruder vehicle using a quadratic extrapolation of the intruder vehicle position data;
- means (20) for assigning a protection region around the host vehicle,
- conflict determining means (22) adapted to determine if the intruder vehicle projected path will intercept the host vehicle protection region and thereby determine if there will be a conflict, and
- conflict resolution means (24) adapted to calculate, on determining that there will be a conflict between the host vehicle and the intruder vehicle, an alteration of the host vehicle course such that the intruder vehicle projected path does not intercept the host vehicle protection region.

11. A collision avoidance system as claimed in Claim 10 further comprising:
- conflict resolution means adapted to assign, on determining that there will be a conflict between the host vehicle and the intruder vehicle, a protection zone around the intruder vehicle and to calculate an alteration of the host vehicle course such that the host vehicle does not intercept the intruder vehicle protection zone.

12. A collision avoidance system as claimed in Claim 10 or 11 wherein the conflict resolution means takes into account host vehicle characteristics and in use is adapted to discard any course alterations that do not comply with these characteristics.

13. A collision avoidance system as claimed in any of Claims 10 to 12 further comprising:
- means adapted, in the event a conflict has been determined, to calculate the time at which the intruder vehicle projected path is closest to the host vehicle.

14. A collision avoidance system as claimed in any of Claims 10 to 13 wherein the conflict resolution means is adapted to select a course alteration such that at least one of time expenditure, fuel expenditure or change in direction of the host vehicle resulting from the course alteration is minimised.

15. A collision avoidance system as claimed in any of Claims 10 to 14 wherein the conflict resolution means is adapted to select, on detecting an intruder vehicle within the host vehicle protection region, an emergency course alteration.

16. A collision avoidance system as claimed in any of Claims 10 to 15 for use in the detection of multiple intruder vehicles, further comprising means for storing the multiple intruder vehicle position data.

17. A collision avoidance system as claimed in Claim 16 adapted to calculate a host vehicle course alteration which will avoid conflict with all intruder vehicles.

18. A vehicle having a collision avoidance system as claimed in any of Claims 10 to 17.

## Patentansprüche

1. Verfahren zum Vermeiden einer Kollision zwischen einem Wirtsfahrzeug (2) und einem Eindringfahrzeug (4), das die folgenden Schritte umfasst:
- Detektieren eines Eindringfahrzeugs innerhalb eines vorgegebenen Bereichs um das Wirtsfahrzeug und Sammeln von Daten über die Eindringfahrzeug-Position im Verlauf der Zeit;
- Vorhersagen eines prognostizierten Wegs (6) des Eindringfahrzeugs unter Verwendung einer quadratischen Extrapolation der Eindringfahrzeug-Positionsdaten;
- Zuweisen eines Schutzbereichs (10) um das Wirtsfahrzeug;
- Bestimmen, ob der prognostizierte Weg des Eindringfahrzeugs den Wirtsfahrzeug-Schutzbereich trifft, und dadurch bestimmen, ob ein Konflikt entsteht, und
- wenn bestimmt wird, dass zwischen dem Wirtsfahrzeug und dem Eindringfahrzeug ein Konflikt entsteht, Berechnen einer Änderung des Wirtsfahrzeug-Kurses, so dass der prognostizierte Weg des Eindringfahrzeugs den Wirtsfahrzeug-Schutzbereich nicht trifft.

2. Verfahren zum Vermeiden einer Kollision zwischen einem Wirtsfahrzeug und einem Eindringfahrzeug nach Anspruch 1, das ferner die folgenden Schritte umfasst:
- wenn bestimmt wird, dass zwischen dem Wirtsfahrzeug und dem Eindringfahrzeug ein Konflikt entsteht, Zuweisen einer Schutzzone um das Eindringfahrzeug, und
- Berechnen einer Änderung des Wirtsfahrzeug-Kurses, so dass das Wirtsfahrzeug die Eindringfahrzeug-Schutzzone nicht trifft.

3. Verfahren zum Vermeiden einer Kollision zwischen einem Wirtsfahrzeug und einem Eindringfahrzeug nach Anspruch 2, das ferner den folgenden Schritt umfasst:
- Ausgeben der Kursänderung als einen Auflösungsvektor an ein Anzeigemittel oder an eine automatische Lenkvorrichtung.

4. Verfahren zum Vermeiden einer Kollision zwischen einem Wirtsfahrzeug und einem Eindringfahrzeug nach einem der Ansprüche 1 bis 3, wobei das Berechnen einer Wirtsfahrzeug-Kursänderung Wirtsfahrzeug-Eigenschaften berücksichtigt und irgendwelche Kursänderungen, die diesen Eigenschaften nicht entsprechen, verworfen werden.

5. Verfahren zum Vermeiden einer Kollision zwischen einem Wirtsfahrzeug und einem Eindringfahrzeug nach einem vorhergehenden Anspruch, das ferner den folgenden Schritt umfasst:
- falls ein Konflikt bestimmt worden ist, Berechnen der Zeit, zu der sich der prognostizierte Weg des Eindringfahrzeugs am nächsten bei dem Wirtsfahrzeug befindet.

6. Verfahren zum Vermeiden einer Kollision zwischen einem Wirtsfahrzeug und einem Eindringfahrzeug nach einem vorhergehenden Anspruch, das ferner den folgenden Schritt umfasst:
- Auswählen einer Kursänderung, so dass ein Zeitaufwand und/oder ein Kraftstoffaufwand und/oder eine Richtungsänderung des Wirtsfahrzeugs, die sich aus der Kursänderung ergeben, minimiert werden.

7. Verfahren zum Vermeiden einer Kollision zwischen einem Wirtsfahrzeug und einem Eindringfahrzeug nach einem vorhergehenden Anspruch, das ferner den folgenden Schritt umfasst:
- wenn ein Eindringfahrzeug in dem Wirtsfahrzeug-Schutzbereich detektiert wird, Auswählen einer Notkursänderung.

8. Verfahren zum Vermeiden einer Kollision zwischen einem Wirtsfahrzeug und einem Eindringfahrzeug nach einem vorhergehenden Anspruch, um mehrere Eindringfahrzeuge zu detektieren, das ferner den Schritt des Speicherns der mehreren Eindringfahrzeug-Positionsdaten umfasst.

9. Verfahren zum Vermeiden einer Kollision zwischen einem Wirtsfahrzeug und einem Eindringfahrzeug nach Anspruch 8, das ferner den folgenden Schritt umfasst:
- Berechnen einer Wirtsfahrzeug-Kursänderung, die einen Konflikt mit allen Eindringfahrzeugen vermeidet.

10. Kursvermeidungssystem (14) für ein Wirtsfahrzeug, das Folgendes umfasst:
- Detektionsmittel (12), die dafür ausgelegt sind, ein Eindringfahrzeug in einem vorgegebenen Bereich um das Wirtsfahrzeug zu detektieren und Daten über die Eindringfahrzeug-Position im Verlauf der Zeit zu sammeln;
- Mittel (18), um einen prognostizierten Weg des Eindringfahrzeugs unter Verwendung einer quadratischen Extrapolation der Eindringfahrzeug-Positionsdaten vorherzusagen;
- Mittel (20), um einen Schutzbereich um das Wirtsfahrzeug zuzuweisen;
- Konfliktbestimmungsmittel (22), die dafür ausgelegt sind, zu bestimmen, ob der prognostizierte Weg des Eindringfahrzeugs den Wirtsfahrzeug-Schutzbereich trifft, und dadurch Bestimmen, ob ein Konflikt entsteht, und
- Konfliktauflösungsmittel (24), die dafür ausgelegt sind, dann, wenn bestimmt wird, dass zwischen dem Wirtsfahrzeug und dem Eindringfahrzeug ein Konflikt entsteht, eine Änderung des Wirtsfahrzeug-Kurses zu berechnen, so dass der prognostizierte Weg des Eindringfahrzeugs den Wirtsfahrzeug-Schutzbereich nicht trifft.

11. Kollisionsvermeidungssystem nach Anspruch 10, das ferner Folgendes umfasst:
- Konfliktauflösungsmittel, die dafür ausgelegt sind, dann, wenn bestimmt wird, dass zwischen dem Wirtsfahrzeug und dem Eindringfahrzeug ein Konflikt entsteht, eine Schutzzone um das Eindringfahrzeug zuzuweisen und eine Änderung des Wirtsfahrzeug-Kurses zu berechnen, so dass das Wirtsfahrzeug die Eindringfahrzeug-Schutzzone nicht trifft.

12. Kollisionsvermeidungssystem nach Anspruch 10 oder 11, wobei die Konfliktauflösungsmittel Wirtsfahrzeug-Eigenschaften berücksichtigen und im Gebrauch dafür ausgelegt sind, jegliche Kursänderungen zu verwerfen, die diesen Eigenschaften nicht entsprechen.

13. Kollisionsvermeidungssystem nach einem der Ansprüche 10 bis 12, das ferner Folgendes umfasst:
- Mittel, die dafür ausgelegt sind, in dem Fall, in dem ein Konflikt bestimmt worden ist, die Zeit zu berechnen, zu der sich der prognostizierte Weg des Eindringfahrzeugs am nächsten bei dem Wirtsfahrzeug befindet.

14. Kollisionsvermeidungssystem nach einem der Ansprüche 10 bis 13, wobei die Konfliktauflösungsmittel dafür ausgelegt sind, eine Kursänderung zu wählen, so dass ein Zeitaufwand und/oder ein Kraftstoffaufwand und/oder eine Richtungsänderung des Wirtsfahrzeugs, die sich aus der Kursänderung ergeben, minimiert werden.

15. Kollisionsvermeidungssystem nach einem der Ansprüche 10 bis 14, wobei die Konfliktauflösungsmittel dafür ausgelegt sind, dann, wenn ein Eindringfahrzeug in dem Wirtsfahrzeug-Schutzbereich detektiert wird, eine Notkursänderung zu wählen.

16. Kollisionsvermeidungssystem nach einem der Ansprüche 10 bis 15 für die Verwendung bei der Detektion mehrerer Eindringfahrzeuge, das ferner Mittel umfasst, um die Positionsdaten der mehreren Eindringfahrzeuge zu speichern.

17. Kollisionsvermeidungssystem nach Anspruch 16, das dafür ausgelegt ist, eine Wirtsfahrzeug-Kursänderung zu berechnen, die einen Konflikt mit allen Eindringfahrzeugen vermeidet.

18. Fahrzeug, das ein Kollisionsvermeidungssystem nach einem der Ansprüche 10 bis 17 besitzt.

## Revendications

1. Procédé pour éviter une collision entre un véhicule hôte (2) et un véhicule intrus (4) comprenant les étapes consistant à :
détecter un véhicule intrus dans une région prédéterminée autour du véhicule hôte et collecter des données sur la position du véhicule intrus au cours du temps ;
prédire un trajet projeté (6) du véhicule intrus à l'aide d'une extrapolation quadratique des données de position du véhicule intrus ;
affecter une région de protection (10) autour du véhicule hôte ;
déterminer si le trajet projeté du véhicule intrus interceptera la région de protection du véhicule hôte et déterminer, par ce moyen, si un conflit se présentera, et
lorsqu'il est déterminé qu'un conflit se présentera entre le véhicule hôte et le véhicule intrus, calculer une modification de la course du véhicule hôte de manière à ce que le trajet projeté du véhicule intrus n'intercepte pas la région de protection du véhicule hôte.

2. Procédé pour éviter une collision entre un véhicule hôte et un véhicule intrus tel que revendiqué dans la revendication 1, comprenant en outre les étapes consistant à :
lorsqu'il est déterminé qu'un conflit se présentera entre le véhicule hôte et le véhicule intrus, affecter une région de protection autour du véhicule intrus, et
calculer une modification de la course du véhicule hôte de manière à ce que le véhicule hôte n'intercepte pas la région de protection du véhicule intrus.

3. Procédé pour éviter une collision entre un véhicule hôte et un véhicule intrus tel que revendiqué dans la revendication 2, comprenant en outre l'étape consistant à :
délivrer en sortie la modification de course sous la forme d'un vecteur de résolution vers un moyen d'affichage ou un dispositif de pilote automatique.

4. Procédé pour éviter une collision entre un véhicule hôte et un véhicule intrus tel que revendiqué dans l'une quelconque des revendications 1 à 3, dans lequel le calcul d'une modification de course d'un véhicule hôte prend en compte des caractéristiques du véhicule hôte, et toutes les modifications de course qui ne sont pas conformes à ces caractéristiques sont écartées.

5. Procédé pour éviter une collision entre un véhicule hôte et un véhicule intrus tel que revendiqué dans l'une quelconque des revendications précédentes, comprenant en outre l'étape consistant à :
dans l'éventualité où un conflit a été déterminé, calculer l'instant auquel le trajet projeté du véhicule intrus est le plus proche du véhicule hôte.

6. Procédé pour éviter une collision entre un véhicule hôte et un véhicule intrus tel que revendiqué dans l'une quelconque des revendications précédentes, comprenant en outre l'étape consistant à :
sélectionner une modification de course de manière à ce qu'au moins un élément parmi le coût en temps, la surconsommation de carburant ou le changement de direction du véhicule hôte résultant de la modification de la course soit minimisé.

7. Procédé pour éviter une collision entre un véhicule hôte et un véhicule intrus tel que revendiqué dans l'une quelconque des revendications précédentes, comprenant en outre l'étape consistant à :
lorsqu'est détectée la présence d'un véhicule intrus dans la région de protection du véhicule hôte, sélectionner une modification de course d'urgence.

8. Procédé pour éviter une collision entre un véhicule hôte et un véhicule intrus tel que revendiqué dans l'une quelconque des revendications précédentes, pour détecter plusieurs véhicules intrus, comprenant en outre l'étape consistant à stocker les données des positions de la pluralité de véhicules intrus.

9. Procédé pour éviter une collision entre un véhicule hôte et un véhicule intrus tel que revendiqué dans la revendication 8, comprenant en outre l'étape consistant à :
calculer une modification de course de véhicule hôte qui évitera tout conflit avec tous les véhicules intrus.

10. Système d'évitement de collision (14) pour un véhicule hôte comprenant :
un moyen de détection (12) conçu pour détecter un véhicule intrus dans une région prédéterminée autour du véhicule hôte et collecter des données sur la position du véhicule intrus au cours du temps ;
un moyen (18) pour prédire un trajet projeté du véhicule intrus à l'aide d'une extrapolation quadratique des données de position du véhicule intrus ;
un moyen (20) pour affecter une région de protection autour du véhicule hôte ;
un moyen de détermination de conflit (22) conçu pour déterminer si le trajet projeté du véhicule intrus interceptera la région de protection du véhicule hôte et déterminer, par ce moyen, si un conflit se présentera, et
un moyen de résolution de conflit (24) conçu pour calculer, lorsqu'il est déterminé qu'un conflit se présentera entre le véhicule hôte et le véhicule intrus, une modification de la course du véhicule hôte de manière à ce que le trajet projeté du véhicule intrus n'intercepte pas la région de protection du véhicule hôte.

11. Système d'évitement de collision tel que revendiqué dans la revendication 10, comprenant en outre :
un moyen de résolution de conflit conçu pour affecter, lorsqu'il est déterminé qu'un conflit se présentera entre le véhicule hôte et le véhicule intrus, une région de protection autour du véhicule intrus, et pour calculer une modification de la course du véhicule hôte de manière à ce que le véhicule hôte n'intercepte pas la région de protection du véhicule intrus.

12. Système d'évitement de collision tel que revendiqué dans la revendication 10 ou la revendication 11, dans lequel le moyen de résolution de conflit prend en compte des caractéristiques du véhicule hôte, et est conçu, pendant l'utilisation, pour écarter toutes les modifications de course qui ne sont pas conformes à ces caractéristiques.

13. Système d'évitement de collision tel que revendiqué dans l'une quelconque des revendications 10 à 12, comprenant en outre :
un moyen conçu, dans l'éventualité où un conflit a été déterminé, pour calculer l'instant auquel le trajet projeté du véhicule intrus est le plus proche du véhicule hôte.

14. Système d'évitement de collision tel que revendiqué dans l'une quelconque des revendications 10 à 13, dans lequel le moyen de résolution de conflit est conçu pour sélectionner une modification de course de manière à ce qu'au moins un élément parmi le coût en temps, la surconsommation de carburant ou le changement de direction du véhicule hôte résultant de la modification de la course soit minimisé.

15. Système d'évitement de collision tel que revendiqué dans l'une quelconque des revendications 10 à 14, dans lequel le moyen de résolution de conflit est conçu pour sélectionner, lorsqu'est détectée la présence d'un véhicule intrus dans la région de protection du véhicule hôte, une modification de course d'urgence.

16. Système d'évitement de collision tel que revendiqué dans l'une quelconque des revendications 10 à 15 destiné à être utilisé pour la détection de plusieurs véhicules intrus, comprenant en outre un moyen pour stocker les données des positions de la pluralité de véhicules intrus.

17. Système d'évitement de collision tel que revendiqué dans la revendication 16 conçu pour calculer une modification de course de véhicule hôte qui évitera tout conflit avec tous les véhicules intrus.

18. Véhicule ayant un système d'évitement de collision tel que revendiqué dans l'une quelconque des revendications 10 à 17.
